# EUROPEAN PATENT SPECIFICATION

(11) **EP 2 557 003 B1**
(45) Date of publication and mention of the grant of the patent: **02.04.2014**
(21) Application number: 11177112.7
(22) Date of filing: 10.08.2011
(51) Int. Cl.: B60T 7/10, B22D 17/00, B29C 45/00, G05G 1/04

(54) **Parking brake assembly for motor vehicle**
Feststellbremsanordnung für Kraftfahrzeuge
Ensemble de frein à main pour véhicule à moteur

(43) Date of publication of application: 13.02.2013
(73) Proprietor: FICO CABLES, S.A., 08027 Barcelona (ES)
(72) Inventor: Alonso Gras, David, 08173 Sant Cugat Del Valles (ES); Vals Garcia, Gerard, 08301 Mataro' (ES)
(74) Representative: ZBM Patents - Zea, Barlocci & Markvardsen

(56) References cited:
- EP-A1- 0 499 494
- EP-A2- 1 273 495
- DE-A1- 3 120 378

## Description

The present invention relates to a device for remotely driving an actuating member and particularly to a parking brake assembly for a motor vehicle as defined in the preamble of claim 1.

### BACKGROUND ART

Within the field of the invention, parking brake assemblies for motor vehicles (also referred to as hand brake assemblies) are known to keep the car stationary, e.g. when parked.

Parking brake assemblies typically comprise a cable having one end connected to the brake mechanism of the vehicle and other end being associated with a user actuating mechanism. This actuating mechanism is typically in the form of a hand operated lever although it may take other forms such as a foot-operated pedal or a pull handle depending on the requirements or features of the motor vehicle. When the user, i.e. the driver, operates the actuating mechanism, the cable transmits this actuation to the brake mechanism of the vehicle.

Most of the known parking brake assemblies are provided with a ratchet locking mechanism that serves the purpose of keeping the actuating mechanism (that is, the hand operated lever) engaged until a release means is actuated by the user. The release means may be a release cable or rod.

Within the prior art solutions in which the release means comprises a release cable, the cable is allowed to be displaced within a sheath or conduit when it is actuated by the user upon actuating the release button. Examples of prior art cable release solutions are described in W02005016716, US2003015380 or US2010139441.

Alternative solutions have been also proposed in which the cable is fixed and the sheath is movable. For example, document DE3120378 discloses an adjusting device for operating remote parts comprising a cable fitted within a sheath or conduit. When an actuator, such as a pedal, pulls one end of the conduit, the conduit is displaced relative to the cable. As the other end of the conduit is fixed, the sheath becomes deflected causing a movable adjusting unit to be pushed. The deflection of the conduit in this arrangement is based on having one end of the cable always fixed at one point which, in combination with the provision of a support point where one end of the conduit is fixed, results in the deformation of the conduit.

The use of a release cable has the advantage of reducing working noise and occupying less space. However, the known release cable solution is not per se simple since it requires the provision of mechanical converter means for converting the pushing action of the release button into a pulling action of a pawl in order to release it from the ratchet.

Solutions in which the release means comprises a release rod have the advantage of being simple and robust. However, they suffer from working noise that is generated due the mechanical contact of the rod with other parts of the assembly. Documents EP0457461, EP1418102, EP0747274 or EP0344369 are examples of this prior art solution.

These known solutions based on the use of a release rod have been also combined with the provision of one-piece moulded handbrakes. This allows complex shapes and geometries to be obtained having high stiffness features with parts of small volume. For example, DE102005035283 and EP1127760 disclose rod operated releasing arrangements for a hand brake lever in which the hand brake lever is a moulded part obtained for example from cast light metal alloys, injection-moulded plastics, etc. Further examples of metal cast solutions are US4519483, US6363811, W09817512, US2008006488 and US2003075390.

However, the different geometries that can be obtained by injection moulding of at least the handbrake lever makes it difficult to use the release rod solution in driving assemblies. There is usually little room available in the handbrake lever, especially with these geometries obtained by injection moulding, and therefore it is very difficult to provide the release rod along the lever arm of the handbrake assembly. Other alternatives for release mechanism based on a kinematics chain of rigid elements need more room within the handbrake and more parts and joints which adversely affects the overall cost of the final product.

EP1273495 discloses parking brake assembly for a motor vehicle comprising a handle provided with an end grip element, and having a middle part for receiving a stop mechanism, and an opposite end part for receiving a traction mechanism. The handle is made of an injected material.

The invention provides a particularly advantageous parking brake assembly, and particularly a release means therefor, while providing additional advantages over the solutions known in the art.

### SUMMARY OF THE INVENTION

The invention provides a parking brake assembly for a motor vehicle that comprises a main body in the form of a handbrake lever arm. The handbrake lever arm is shaped and sized to be grasped comfortably by the user (i.e. the vehicle driver) and rotated in order to actuate the parking brake, for example when the vehicle is parked.

The main body or handbrake lever arm is pivotally attached to a base plate. This base plate is fixed, for example, to any fixed part of the motor vehicle. The handbrake lever arm can be rotated relative to the base plate when actuated by the user. This rotation causes the parking brake to be actuated.

An actuator, for example in the form of a release push button is provided at the free end of the main body or lever arm. A release means is also provided. The release means comprises a driven member, for example in the form of a pivotable pawl that is rotatably mounted to the main body. The pawl has a number of teeth suitable for meshing with those of a ratchet segment that is fixed to the base plate. In this way, when the release push button is actuated by the user, the pawl is released from the ratchet. This allows the main body or lever arm to be rotated downwards relative to the base plate in order to release the vehicle parking brake. When no action is exerted on the release button, the main body remains stationary in a given angular position relative to the base plate.

The parking brake assembly according to the invention is of the type that the release means comprises a release cable as explained above. The cable operated release means is advantageously combined with the provision of at least some parts of the parking brake assembly made of an injected material, for example a plastics material such as thermoplastic, or a metal alloy, with light metal alloys being the most preferred. The injected material or the alloy may comprise magnesium. The parking brake assembly or at least some parts thereof can be thus obtained as a single piece part made of an injected material.

As stated above, this manufacturing process may be for making the entire parking brake assembly or only for some parts thereof, such as for example the handbrake lever arm. This feature has the advantage of providing a considerable weight reduction in the overall assembly as well as a greater simplicity allowing more complex designs to be created.

More particularly, the release means of the parking brake assembly according to the invention comprises a release cable arrangement that operatively connects the actuator (i.e. release push button) with the driven member (i.e. a pawl) such that when the actuator is actuated (for example, pushed) the rotation of the main body (i.e. lever arm) is permitted relative to the base plate.

In some embodiments of the invention, the cable arrangement may comprise a Bowden cable arrangement. This Bowden cable arrangement may include a first transmission member, such as an inner cable, and a second transmission member, such as a sheath or conduit surrounding the inner cable. The first and second transmission members are fitted within one another in a way that they can be moved inside to one another, particularly when the actuator is actuated by the user. The push force imparted by the user on the actuator (i.e. release push button) is, due to the particular arrangement of the Bowden cable arrangement, converted into a pull force on the driven member.

Still in some embodiments of the invention, the first transmission member or inner cable has a first end that is fixed to a first location of the main body and a second end coupled, at a second opposite location of the main body, to a driven member. On the other hand, the second transmission member or conduit has a first end arranged at the first location of the main body and associated with the actuator, and a second end fixed at the second opposite location of main body.

According to this arrangement, the actuation of the actuator, for example pushed by the user; results in a deformation of the Bowden cable arrangement inside the main body. This deformation is mainly caused initially until a length of the Bowden cable arrangement abuts an inner portion of an upper wall of the lever arm. At this point, a reaction force is caused by the first transmission member on the driven member so that the main body is released from the base plate allowing the former to be rotated relative to the latter. This rotation of the main body relative to the base plate results in the actuation of the parking brake of the vehicle.

As used herein, Bowden cable arrangement is meant a cable arrangement that is suitable for transmitting mechanical forces, especially axial forces along the cable arrangement. Within the meaning of the present invention and as stated above, the Bowden cable arrangement comprises an inner cable, such as for example a steel or stainless steel cable or wire that can be stranded if necessary, and a hollow outer cable housing, also referred to as sheath or conduit. Both parts are movable to each other.

The particular embodiment of the present invention in which a Bowden cable arrangement is provided works in a way that the outer cable is a reactive conduit. Reactive conduit as used herein stands for a conduit that can be deformed as a reaction of a force exerted at one of its ends such that a pushing force imparted on the actuator is converted into a pulling force on the release means. This reactive function is advantageously performed through a very simple element (conduit) so complex converter means or similar assemblies are no longer necessary.

It is preferred the use of first biasing means that may act on the push actuator to force it out of the main body in the first location of the main body. Second biasing means, in addition to the first biasing means, that may act on the pull driven member in the second location of the main body can be also provided.

A number of end fittings may be provided at least for one of the first and the second transmission members. The end fittings can be formed integrally in the main body. These end fittings serve the purpose of fixing the at least for one of the first and the second transmission members to the parking brake assembly.

The provision of the release cable arrangement provides significant advantages over parking brake assemblies known in the art.

Overall simplification: the solution of the present invention based on a release cable assembly with reactive conduit (instead of rigid release rod, or other equivalent means such as a kinematics chain as used by the prior art known assemblies) greatly simplifies the release means. This, in combination with the manufacturing of at least the lever arm by injection moulding results in the number of parts to be considerably reduced. In this respect, it is envisaged that cable supporting elements (nails, etc), as well as part of the release means, are directly moulded with the injected lever arm. In this way, any other fixing parts used in parking brake assemblies known in the art (such as clips or rivets) are removed and so their costs. The use of injection moulded parts in the release cable solution of the present invention allows the integration of a number of functions in the assembly itself which involves less assembly operations saving further costs. For example, the release cable can be directly fixed to lever arm by means of fittings. As stated above, end fittings may be also provided for the first and the second transmission members, or both, and they may be also formed integrally in the main body.

Design flexibility: it has been found that with the cable release and injection moulded solution there are less or none design restrictions in designing the parts of the assembly (mainly the handbrake lever) as compared with known release rod solutions. The invention can be therefore adapted to any given complex geometry.

Smaller volume: in connection with the above advantage of high flexibility, the assembly of the invention can be adapted to difficult geometries with small room. Due to the use of a release cable arrangement unrestricted designs are allowed in terms of changes in cross-section. This results in a balanced solution in terms of maximum strength and minimum weight of the assembly.

Further advantages: in addition to the above, it has been also found that the space that is not used by the release rod can be filled of any suitable material in order to improve assembly stiffness.

Still further advantages have been found related to enhanced rigidity and stiffness under given stress conditions in combination with weight and strength improvements.

Although the preferred embodiment is with the actuator adapted for being pushed in order to cause the driven member to be pulled, the invention is by no means limited to other embodiments in which, for example, the actuator is adapted for being pulled in order to cause the driven member to be pushed.

Additional objects, advantages and features of embodiments of the parking brake assembly disclosed herein will become apparent to those skilled in the art upon examination of the description, or may be learned by practice of the present invention.

### BRIEF DESCRIPTION OF THE DRAWINGS

Particular embodiments of the present invention will be described in the following by way of non-limiting examples, with reference to the appended drawings, in which:

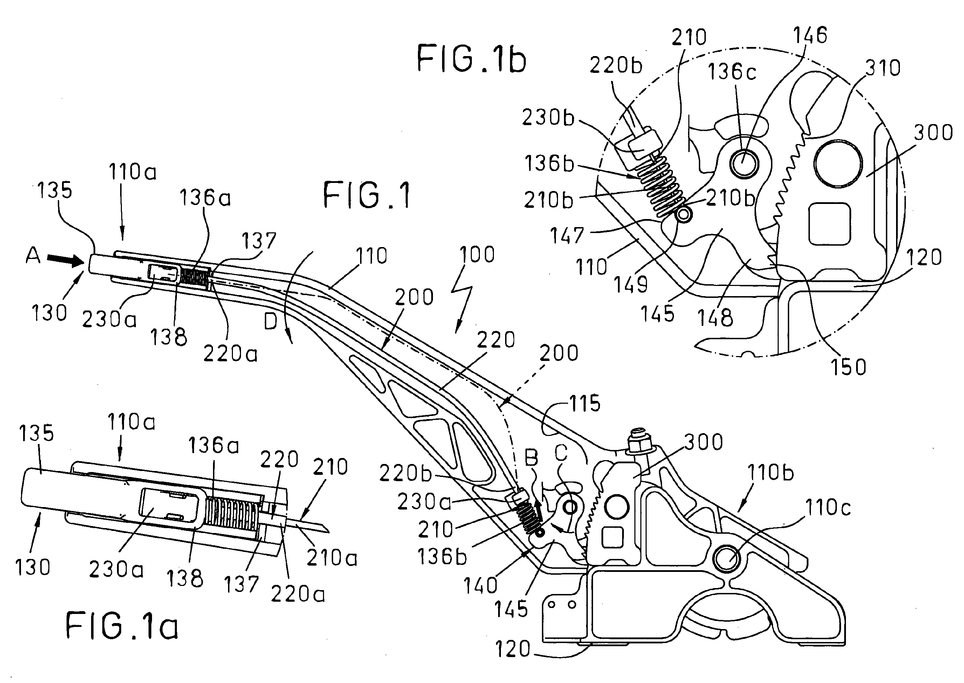

Figure 1 is a general elevational view of one embodiment of a parking brake assembly according to the invention in which lever arm is depicted such that inner parts are visible;
Figure 1 a is a part view of a first location of the parking brake assembly in figure 1;
Figure 1 b is a part view of a second location of the parking brake assembly in figure 1 showing one embodiment of a release means of the parking brake assembly;

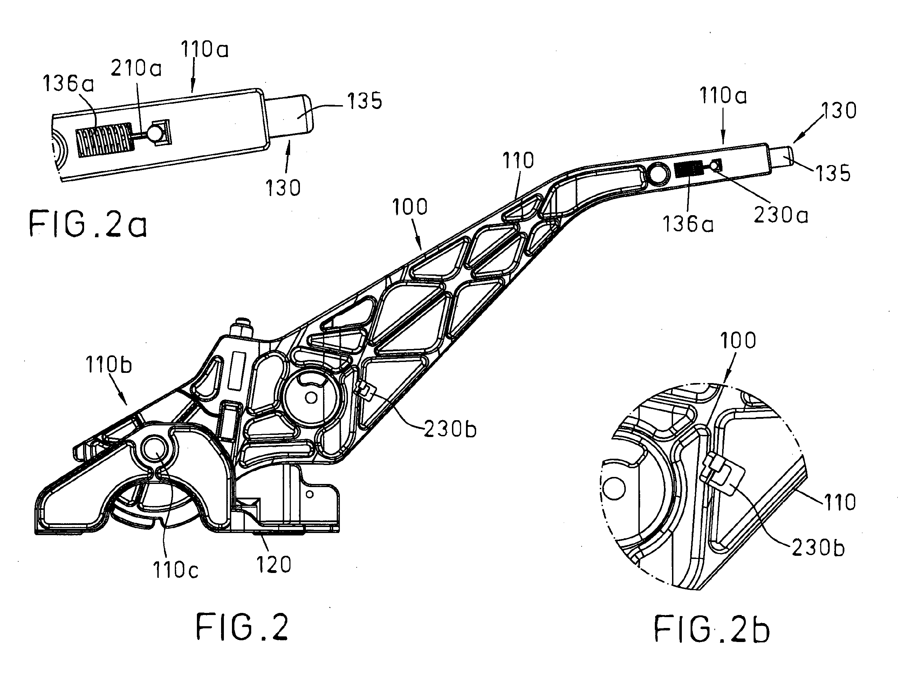

Figure 2 is a general elevational view of the embodiment of the parking brake assembly in figure 1 in a condition ready to be fitted in a motor vehicle;
Figure 2a is a part view of a first location of the parking brake assembly in figure 2; and
Figure 2b is a part view of a second location of the parking brake assembly in figure 2 showing an end fitting.

### DETAILED DESCRIPTION OF EMBODIMENTS OF THE INVENTION

Figure 1a illustrates one embodiment of a parking brake assembly in particular for the use in a motor vehicle. This assembly is not however limited to parking brake devices and could be advantageously used for other applications in which a remote device should be actuated and particularly where a push-pull transmission is necessary, for example, for actuating a release means.

The particular embodiment shown in the drawings refers to a parking brake assembly and it has been indicated as a whole at 100 in the figures. The parking brake assembly 100 comprises a main body 110 and a base plate 120. The main body 110 can be rotated relative to the base plate 120.

The main body in the embodiment shown is a handbrake lever arm 110 and will be referred to as handbrake lever arm or lever arm in the following. However, it will be apparent for the skilled persons that for other applications that the invention can useful, the main body 110 can be in the form of foot-operated pedal, pull handle, etc.

In the particular embodiment shown, the handbrake lever arm 110 comprises an elongated member made of an injected material, for example a plastics material such as thermoplastic. It is however preferred that the lever arm 110 is made of injected light metal alloys that may comprise e.g. magnesium. Other parts of the parking brake assembly 100 may be also formed by means of the same process. Therefore, one or more of the parts obtained through this process can be therefore formed as a single or monolithic piece thus making the assembly simpler and cost effective.

The handbrake lever arm 110 has a first location 110a and an opposite, second location 110b.

The first location 110a is the free end of the elongated member of the lever arm 110. The first location 110a corresponds to the location where the user grasps the handbrake lever 110 to actuate the parking brake.

The second location 110b the handbrake lever 110 corresponds to the point where the handbrake lever 110 is pivotally coupled to the base plate 120. In particular, pivotal engagement of the lever arm 110 with the base plate 120 is around pivot axis 110c.

The parking brake assembly 100 is further provided with a release means 140. The release means 140 is intended for allowing the handbrake lever arm 110 to be rotated relative to the base plate 120 around pivot axis 110c. When the release means 140 is not actuated, the handbrake lever arm 110 is stationary to the base plate 120.

As clearly shown in figure 1b, the release means 140 includes a driven member 145 that is pivotally mounted to the lever arm 110 so that it can be rotated around an axis 146. In the embodiment shown, the driven member is in the form of a pawl 145 having a cable connecting portion 147 and a ratchet engaging portion 148. As stated above, the pawl 145 is mounted to the lever arm 110 so that it can be rotated around axis 146.

The cable connecting portion 147 of the pawl 145 is provided with a cylindrical hole suitably sized for receiving an end fitting in the form of a swaged end 149. Other alternative geometries for the hole in the cable connecting portion 147 are of course possible. The end fitting 149 is clamped with of is part of a second end 210b in a first transmission member or inner cable 210. This inner cable 210 is, in turn, part of a Bowden cable arrangement 200.

The Bowden cable arrangement 200 operatively connects the actuator with the driven member 145 (i.e., the pawl) in a way that when the actuator 130 is pushed in the direction shown by arrow A in figure 1, the driven member 145 is pulled in the direction shown by arrow B in figure 1. This causes the rotation of the pawl 145 in the direction shown by arrow C in figure 1 and therefore the main body or lever arm 110 is permitted to rotate downwards to the base plate 120 in the direction shown by arrow D in figure 1 so that the vehicle brake mechanism is released.

As shown in figure 1, the first location 110a of the lever arm 110 is configured as a housing for specifically receiving the actuator 130. This particular configuration of the first location 110a of the lever arm 110 is obtained directly from the molding process for manufacturing the lever arm 110. This results in cost savings as no extra parts are required for this purpose.

The inner cable 210 of the release Bowden cable arrangement 200 can be a conventional steel stranded wire suitable for transmitting longitudinal forces. The release Bowden cable arrangement 200 further comprises a second transmission member in the form of an outer cable or sheath, also referred herein to as conduit 220. The inner cable 210 and the conduit 220 are arranged such that they can be moved inside to one another when the actuator 130 is operated by the user.

Conduit 220 has a first end 220a and a second, opposite end 220b. The first end 220a of the conduit 220 abuts one end portion of a compression spring 136a the will be described in detail further on. The second end 220b of the conduit 220 is fixed to the lever arm 110 through end fitting 230b.

At least one of the end fitting 230b or an end fitting 230a associated with the first end 220a of conduit 220 and possibly other fixing members, such as those which could be used, e.g. for clamping the conduit 220 along the lever arm 110 if necessary, can be formed integrally with the lever arm 110. In this respect, the end fittings are formed as protrusions obtained directly from the molding process of the lever arm 110. This avoids the use of extra parts, such as clamping members, sliders, etc. and costs are therefore reduced.

The inner cable 210 has a first end 210a fixed at the first location 110a of the lever arm 110 and a second end 210b that is provided with the end fitting 149 as explained above with reference to figure 1 b. The end fitting 149 is fitted into the cylindrical hole formed in the cable connecting portion 147 of the pawl 145.

The second end 210b of the inner cable 210 is attached to the respective inner end 138 of the actuator 130.

With this configuration, the release means 140 can be actuated through the Bowden cable arrangement 200 by means of actuator 130.

As shown in figure 1 b, the engaging portion 148 of the pawl 145 comprises a number of teeth 150. The teeth 150 of the pawl 145 are adapted in size, shape and pitch for suitably engage corresponding teeth 310 of a ratchet segment 300. The ratchet segment 300 is fixedly attached to or is part of the base plate 120. A torsion spring 136c can be provided around axis 146 for urging the pawl 145 against ratchet segment 300 as explained further below. Alternative spring means can be of course used for urging the pawl 145 against the ratchet segment 300.

The actuator 130 comprises a spring-loaded release push button 135. The release push button 135 is mounted in the lever arm 110 in a way that it is partially fitted into the first location 110a thereof. The inner end 138 of the release push button 135 is biased outwards by the above mentioned compression spring 136a. The compression spring 136a is fitted between a stop wall 137 formed inside the first location 110a of the lever arm 110 and the inner end of the release push button 135.

The compression spring 136a serves the purpose of holding the release push button 135 in place, that is, with its free end protruding out of the first location 110a of lever arm 110. An end fitting 230b is provided to prevent the release push button 135 from coming off the lever arm 110. As it will be explained below, the end fitting 230b is formed integral with the lever arm 110. The compression spring 136a also serves the purpose of providing the user with good feeling when actuating the release push button 135.

An additional compression spring 136b may be also provided. This additional compression spring 136b is provided for urging the driven member 145 against ratchet segment 300. The compression spring 136b is fitted between the cable connecting portion 147 of the pawl 145 and the second end 220b of the conduit 220 as shown in the closer view of figure 1b. The compression spring 136b is therefore arranged such that it forces the pawl 145 to be engaged to the ratchet segment 300.

The compression spring 136b may be replaced with or complemented by the above mentioned torsion spring 136c that can be provided around axis 146. This torsion spring 136c also serves the purpose of urging the pawl 145 against ratchet segment 300.

The operation of the embodiment of the parking brake assembly shown in the figures will be explained below with particular reference to figure 1 of the drawings.

As explained above, when the user needs to move the lever arm 110 in order to actuate the parking brake, whether it is for enabling it (lever arm 110 rotated in the direction of arrow D) or disabling it (lever arm 110 rotated in a direction opposite the direction of arrow D), the lever arm 110 needs to be released from the base plate 120. For this purpose, the user actuates the actuator 130 by pressing the push button according to the direction shown by arrow A in figure 1. This causes the conduit 220 of the Bowden cable arrangement 200 to be pushed by its second end 220b in a way that a pushing force is applied on the driven member or pawl 145 causing the conduit 220 to be deformed, and consequently the whole cable arrangement 200, until a length thereof abuts an inner portion of an upper wall 115 of the lever arm 110 as shown in the broken lines of figure 1. The deformation of the conduit 220 inside the lever arm 110 causes a reaction force, shown by arrow B, resulting in a pulling force exerted on the driven member or pawl 145 by the inner cable 210. This causes the pawl 145 to be rotated around axis 146 and the driven member 145 to be released from the ratchet 300. In this point, the lever arm 110 is permitted to be rotated downwards relative to the base plate 120 around pivot axis 110c, according to arrow D in figure 1 in order to release the vehicle parking brake.

When the release means 140 is not actuated, the lever arm 110 is kept in a given angular position relative to the base plate 120 as pawl teeth 150 are engaged with ratchet teeth 310.

Although only a number of particular embodiments and examples of the invention have been disclosed herein, it will be understood by those skilled in the art that other alternative embodiments and/or uses of the invention and obvious modifications and equivalents thereof are possible. Furthermore, the present invention covers all possible combinations of the particular embodiments described. Thus, the scope of the present invention should not be limited by particular embodiments, but should be determined only by a fair reading of the claims that follow.

## Claims

1. A parking brake assembly (100) for a motor vehicle comprising a main body (110) and a base plate (120), the main body (110) being pivotally movable relative to the base plate (120) and provided with an actuator (130), and a release means (140) that comprises a driven member (145) capable of engaging the base plate (120) for maintaining the main body (110) fixed relative to the base plate (120), with the main body (110) is made of an injected material, the release means (140) further comprising a cable arrangement (200) for operatively connecting the actuator (130) with the driven member (145) such that when the actuator (130) is actuated, rotation of the main body (110) is permitted relative to the base plate (120), the cable arrangement comprising a Bowden cable arrangement (200) including a first transmission member (210) comprising a first end (210a) that is fixed to a first location (110a) of the main body (110); and a second end (210b) attached, at a second, opposite location (110b) of the main body (110), to a driven member (145), and a second transmission member (220) comprising a first end (220a) arranged at the first location (110a) of the main body (110) and associated with the actuator (130); and a second end (220b) fixed at the second location (110b) of the main body (110)
wherein the first and second transmission members (210, 220) can be moved inside to one another and are disposed in the main body (110) such that when a push force is imparted by one end (220a) of the Bowden cable arrangement (200), a pull force is exerted by an opposite end (210b) thereof causing the actuation of the release means (140) such that rotation of the main body (110) is permitted relative to the base plate (120), and such that when the actuator (130) is operated a deformation of the Bowden cable arrangement (200) is caused whereby the first transmission member (210) exerts a force on the driven member (145) releasing the main body (110) from the base plate (120) thus allowing the former to be rotated relative to the latter, with at least said deformation being initially caused until a length of the Bowden cable arrangement (200) abuts an inner portion of an upper wall (115) of the main body (110) after which a reaction force is caused by the first transmission member (210) on the driven member (145) for releasing the main body (110) from the base plate (120).

2. The assembly (100) of claim 1, wherein said injected material is a metal alloy.

3. The assembly (100) of claim 1 or claim 2, wherein said injected material comprises magnesium.

4. The assembly (100) of claim 1, wherein it further comprises first biasing means (136a) acting on the actuator (130) out of the main body (110) in the first location (110a) thereof.

5. The assembly (100) of any of the preceding claims, wherein it further comprises second biasing means (136b; 136c) acting on the driven member (145) in the second location (110b) thereof.

6. The assembly (100) of any of the preceding claims, wherein it further comprises end fittings (230a, 230b) associated with at least for one of the first and the second transmission members (210, 220),

7. The assembly (100) of claim 6, wherein at least one of the end fittings (230a, 230b) is formed integrally with the main body (110).

8. The assembly (100) of any of the preceding claims, wherein the actuator (130) comprises a push button (135) and the driven member comprises a pivotable pawl (145) whose teeth (150) can be meshed with the teeth (310) of a ratchet segment (300) fixed to the base plate (120) whereby as the push button (135) is actuated the pawl (145) is released from the ratchet segment (300) allowing the main body (110) to be rotated relative to the base plate (120).

## Patentansprüche

1. Feststellbremsanordnung (100) für Kraftfahrzeuge, der einen Hauptkörper (110) und eine Grundplatte (120) umfasst, wobei der Hauptkörper (110) drehbar bezüglich der Grundplatte (120) ist und mit einem Aktor (130) verstehen ist, und der einen Ausrücker (140) umfassend ein angetriebenes Element (145) umfasst, das imstande ist, die Grundplatte (120) einzugreifen um den Hauptkörper (110) fest bezüglich der Grundplatte (120) zu halten, wobei der Hauptkörper (110) aus einem eingespritzten Material hergestellt ist, wobei der Ausrücker (140) weiterhin eine Kabelanordnung (200) zur betriebsfähigen Verbindung des Aktors (130) mit der angetriebenen Element (145) umfasst, so dass, wenn der Aktor (130) in Betrieb gesetzt wird, die Drehung des Hauptkörpers (110) bezüglich der Grundplatte (120) ermöglicht wird, wobei die Kabelanordnung eine Bowdenzuganordnung (200) umfasst, die ein erstes Übertragungselement (210) einschließt, das ein erstes Ende (210a) umfasst, das in einer ersten Position (110a) des Hauptkörpers (110) befestigt ist und ein zweites Ende (210b) umfasst, das in einer zweiten gegenüberliegenden Position (110b) des Hauptkörpers (110) mit einem angetriebenen Element (145) verbunden ist, und ein zweites Übertragungselement (220) einschließt, das ein erstes Ende (220a) umfasst, das in der ersten Position (110a) des Hauptkörpers (110) angeordnet und mit dem Aktor (130) verbunden ist und ein zweites Ende (220b) umfasst, das in der zweiten Position (110b) des Hauptkörpers (110) befestigt ist
wobei das erste und das zweite Übertragungselement (210, 220) in einander geschoben werden können und im Hauptkörper (110) angeordnet sind, so dass, wenn eine Stoßkraft von einem Ende (220a) der Bowdenzuganordnung (200) ausgeübt wird, eine Zugkraft von einem gegenüberliegenden Ende (210b) davon ausgeübt wird, wobei die Betätigung des Ausrückers (140) verursacht wird, so dass die Drehung des Hauptkörpers (110) bezüglich der Grundplatte (120) ermöglicht wird und so dass, wenn der Aktor (130) betätigt wird, eine Verformung der Bowdenzuganordnung (200) verursacht wird, wodurch das erste Übertragungselement (210) eine Kraft auf das angetriebene Element (145) ausübt, wodurch der Hauptkörper (110) aus der Grundplatte (120) ausgerückt wird, was dazu führt, dass der Erstere bezüglich des Letzteren drehen kann, wobei mindestens die Verformung zunächst verursacht wird bis eine Länge der Bowdenzuganordnung (200) aus einem inneren Teil einer oberen Wand (115) des Hauptkörpers (110) herausragt, wonach eine Auflagekraft durch das erste Übertragungselement (210) auf das erste angetriebene Element (145) ausgeübt wird, um den Hauptkörper (110) aus der Grundplatte (120) auszurücken.

2. Anordnung (100) nach Anspruch 1, wobei das eingespritzte Material eine Metalllegierung ist.

3. Anordnung (100) nach Anspruch 1 oder Anspruch 2, wobei das eingespritzte Material Magnesium umfasst.

4. Anordnung (100) nach Anspruch 1, die weiterhin ein erstes Vorspannungsmittel (136a) umfasst, das auf den Aktor (130) außerhalb des Hauptkörpers (110) in der ersten Position (110a) desselben wirkt.

5. Anordnung (100) nach einem der vorhergehenden Ansprüche, die weiterhin ein zweites Vorspannungsmittel (136b; 136c) umfasst, das auf das angetriebene Element (145) in der zweiten Position (110b) desselben wirkt.

6. Anordnung (100) nach einem der vorhergehenden Ansprüche, die weiterhin Endstücke (230a, 230b) umfasst, die mit mindestens einem der ersten und zweiten Übertragungselemente (210, 220) verbunden sind.

7. Anordnung (100) nach Anspruch 6, wobei mindestens eines der Endstücke (230a, 230b) einteilig mit dem Hauptkörper (110) gebildet ist.

8. Anordnung (100) nach einem der vorhergehenden Ansprüche, wobei der Aktor (130) einen Druckknopf (135) umfasst und das angetriebene Element eine schwenkbare Sperrklinke (145) umfasst, deren Zähne (150) in die Zähne (310) einer Klinkenstrecke (300) eingreifen kann, die auf der Grundplatte (120) befestigt ist, wobei, wenn der Druckknopf (135) betätigt wird, die Sperrklinke (145) aus der Klinkenstrecke (300) ausgerückt wird, was die Drehung des Hauptkörpers (110) bezüglich der Grundplatte (120) ermöglicht.

## Revendications

1. Ensemble (100) de frein à main pour véhicule à moteur comprenant un corps principal (110) et une plaque (120) de base, étant le corps principal (110) pivotable par rapport à la plaque (120) de base et étant fourni avec un actionneur (130), et un moyen (140) de libération comprenant un élément entraîné (145) capable d'enclencher la plaque (120) de base afin de maintenir le corps principal (110) fixé par rapport à la plaque (120) de base, étant le corps principal (110) fait d'un matériau injecté, comprenant le moyen (140) de libération en outre un ensemble (200) de câble pour relier de manière opérationnelle l'actionneur (130) avec l'élément entraîné (145) de façon que, lorsque l'actionneur (130) est actionné, la rotation du corps principal (110) par rapport à la plaque (120) de base est rendue possible, comprenant l'ensemble de câble un ensemble (200) de câble Bowden incluant un premier élément (210) de transmission comprenant un premier bout (210a) qui est fixé à un première emplacement (110a) du corps principal (110); et un deuxième bout (210b) qui est rattaché, à un deuxième emplacement (110b) opposé du corps principal (110), à un élément entraîné (145), et un deuxième élément (220) de transmission comprenant un première bout (220a) disposé à un premier emplacement (110a) du corps principal (110) et étant associé avec l'actionneur (130); et un deuxième bout (220b) fixé au deuxième emplacement (110b) du corps principal (110)
dans lequel le premier et deuxième éléments (210, 220) de transmission peuvent être déplacés l'un dans l'autre et sont disposés dans le corps principal (110) de façon que, lorsque une force de poussée est exercée par un bout (220a) de l'ensemble (200) de câble Bowden, une force de traction est exercée par un bout opposé (210b) du même, entraînant ainsi l'actionnement du moyen (140) de libération de façon que la rotation du corps principal (110) est permise par rapport à la plaque (120) de base et de façon que, lorsque l'actionneur (130) est actionné, une déformation de l'ensemble (200) de câble Bowden est entraînée, par lequel le premier élément (210) de transmission exerce une force sur l'élément entraîné (145) libérant ainsi le corps principal (110) de la plaque (120) de base, permettant ainsi la rotation du premier par rapport au dernier, étant au moins ladite déformation initialement entraînée jusqu'à ce que une longueur de l'ensemble (200) de câble Bowden dépasse une partie intérieure d'une paroi supérieure (115) du corps principal (110), après quoi une force de réaction est exercée par le premier élément (210) de transmission sur l'élément entraîné (145) afin de libérer le corps principal (110) de la plaque (120) de base.

2. L'ensemble (100) de la revendication 1, dans lequel ledit matériau injecté est un alliage métallique.

3. L'ensemble (100) de la revendication 1 ou de la revendication 2, dans lequel ledit matériau injecté comprend du magnésium.

4. L'ensemble (100) de la revendication 1, comprenant en outre un premier moyen (136a) de rappel agissant sur l'actionneur (130) hors du corps principal (110) dans le première emplacement (110a) du même.

5. L'ensemble (100) de l'une quelconque des revendications précédentes, comprenant en outre un deuxième moyen (136b; 136c) de rappel agissant sur l'élément entraîné (145) dans le deuxième emplacement (110b) du même.

6. L'ensemble (100) de l'une quelconque des revendications précédentes, comprenant en outre des raccords d'extrémité (230a, 230b) associés à au moins un d'entre le premier et le deuxième élément (210, 220) de transmission.

7. L'ensemble (100) de la revendication 6, dans lequel au moins un des raccords d'extrémité (230a, 230b) est formé de façon intégrale avec le corps principal (110).

8. L'ensemble (100) de l'une des revendications précédentes, dans lequel l'actionneur (130) comprend un bouton-poussoir (135) et l'élément entraîné comprend un cliquet pivotable (145) dont les dents (150) peuvent s'engrener avec les dents (310) d'une section (300) de cliquet fixée à la plaque (120) de base, par lequel, lorsque le boutton-poussoir (135) est actionné, le cliquet (145) est libéré de la section (300) de cliquet permettant la rotation du corps principal (110) par rapport à la plaque (120) de base.
